# EUROPEAN PATENT APPLICATION

(11) **EP 4 170 791 A1**
(43) Date of publication of application: **26.04.2023**
(21) Application number: 21900874.5
(22) Date of filing: 17.11.2021
(51) Int. Cl.: H01M 50/22, H01M 50/30, H01M 50/375, A62C 5/00, A62C 99/00, A62D 1/06

(54) **BATTERY MODULE AND BATTERY PACK INCLUDING SAME**

(30) Priority: 04.12.2020 KR 20200168895; 04.11.2021 KR 20210150562
(71) Applicant: LG Energy Solution, Ltd., Seoul 07335 (KR)
(72) Inventor: LEE, Junghoon, Daejeon 34122 (KR); SEONG, Junyeob, Daejeon 34122 (KR); JUNG, Hyemi, Daejeon 34122 (KR)
(74) Representative: Goddar, Heinz J.
(86) International application number: PCT/KR2021/016911
(87) International publication number: WO 2022/119186

(57) **Abstract**

A battery module according to one embodiment of the present disclosure includes a battery cell stack in which a plurality of battery cells are stacked, and a module frame for housing the battery cell stack, wherein a venting part is formed on one side plate of the module frame, wherein the venting part includes an inflow port and a discharge port for discharging gas flowing in through the inflow port, and wherein the inflow port and the discharge port of the venting part are arranged spaced apart from each other in the longitudinal direction of the one side plate.

## Description

### [TECHNICAL FIELD]

### Cross Citation with Related Application(s)

This application claims the benefit of Korean Patent Application No. 10-2020-0168895 filed on December 4, 2020 and Korean Patent Application No. 10-2021-0150562 filed on November 4, 2021 with the Korean Intellectual Property Office, the disclosure of which is incorporated herein by reference in its entirety.

The present disclosure relates to a battery module and a battery pack including the same, and more particularly, to a battery module having an enhanced safety, and a battery pack including the same.

### [BACKGROUND ART]

With the increase of the technological development and demand for a mobile device, demand for a secondary battery as an energy source is rapidly increasing, and accordingly, many researches of the battery capable of meeting a variety of needs are emerging.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, a method of configuring a battery module composed of at least one battery cell and then adding other components to at least one battery module to configure a battery pack is common. Since the battery cells constituting these middle or large-sized battery modules are composed of chargeable/dischargeable secondary batteries, such a high-output and large-capacity secondary battery generates a large amount of heat in a charging and discharging process.

The battery module may include a battery cell stack in which a plurality of battery cells are stacked, a frame for housing the battery cell stack, and end plates for covering the front and rear surfaces of the battery cell stack.

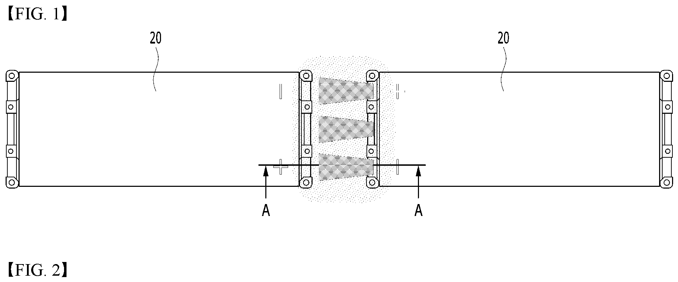

Fig. 1 is a view showing the appearance of a battery module mounted on a conventional battery pack at the time of ignition. Fig. 2 is a section taken the line A-A of Fig. 1, which is a cross-sectional view showing the appearance of a flame that affects adjacent battery modules during ignition of a battery module mounted on a conventional battery pack.

Referring to Figs. 1 and 2, the conventional battery module includes a battery cell stack in which a plurality of battery cells 10 are stacked, a frame 20 for housing the battery cell stack, end plates 30 formed on the front and rear surfaces of the battery cell stack, terminal busbars 40 formed so as to protrude to the outside of the end plates 30, and the like.

The frame 20 and the end plate 30 can be combined so as to be sealed by welding. When the frame 20 for housing the battery cell stack and the end plate 30 are combined in this way, the internal pressure of the battery cells 10 increases during overcharge of the battery module to exceed a limit value of the fusion strength of the battery cell. In this case, high-temperature heat, gas, and flame generated in the battery cells 10 can be discharged to the outside of the battery cell 10.

At this time, the high-temperature heat, gas and flame may be discharged through the openings formed in the end plates 30. However, in a battery pack structure in which a plurality of battery modules are arranged so that the end plates 30 face each other, the high-temperature heat, gas and flame ejected from the battery module may affect a battery module. Thereby, the terminal busbar 40 formed on the adjacent end plates 30 of the battery module may be damaged, and high-temperature heat, gas, and flame may enter the inside of the battery module via the openings formed in the adjacent end plates 30 of the battery module to damage the plurality of battery cells 10.

### [DETAILED DESCRIPTION OF THE INVENTION]

### [Technical Problem]

It is an object of the present disclosure to provide a battery module having an enhanced safety by suppressing high-temperature heat and flame discharged when an ignition phenomenon occurs inside the battery module, and a battery pack including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked, and a module frame for housing the battery cell stack, wherein a venting part is formed on one side plate of the module frame, wherein the venting part includes an inflow port and a discharge port for discharging gas flowing in through the inflow port, and wherein the inflow port and the discharge port of the venting part are arranged spaced apart from each other in the longitudinal direction of the one side plate.

The battery module may include a first fire extinguishing material layer located between one side plate of the module frame and the battery cell stack, and the first fire extinguishing material layer may include a fire extinguishing agent.

A second fire extinguishing material layer containing a fire extinguishing agent may be formed in the venting part.

A first fire extinguishing material layer containing a fire extinguishing agent may be formed between one side plate of the module frame and the battery cell stack, a second fire extinguishing material layer containing a fire extinguishing agent may be formed in the venting part, and the fire extinguishing agent contained in the first fire extinguishing material layer and the second fire extinguishing material layer may contain potassium hydrogen carbonate, and at least one of the first fire extinguishing material layer and the second fire extinguishing material layer may cause a thermal decomposition reaction during occurrence of a fire.

The first fire extinguishing material layer and the second fire extinguishing material layer may be connected to each other.

The venting part may have a hole structure, and the hole structure may have an inclined structure.

The venting part may have a hole structure formed in an upper side plate of the module frame, and the hole structure may obliquely penetrate the upper side plate.

The venting part may include an inflow port that is formed on the upper side plate of the module frame and faces the battery cell stack, and a discharge port that discharges gas flowed in through the inflow port, wherein the discharge port may be formed in a direction perpendicular to the inflow port.

The venting part includes a connection part that is formed between the inflow port and the discharge port and guides gas flowing into the inflow port in a direction in which the discharge port is located, and the upper surface of the connection part may be formed obliquely.

The venting part includes an inflow port that is connected to the battery cell stack and is formed in the upward direction on the upper side plate of the module frame, a discharge port that is formed in the upward direction and discharges the gas flown in through the inflow port, and a connection part that connects the inflow port and the discharge port, wherein the connection part may be formed in a direction perpendicular to the inflow and discharge directions of the inflow port and the discharge port.

A discharge passage may be formed between the one side plate of the module frame and the battery cell stack by a thermal decomposition reaction of the first fire extinguishing material layer.

According to another embodiment of the present disclosure, there is provided a battery pack comprising the above-mentioned battery module.

### [ADVANTAGEOUS EFFECTS]

According to embodiments of the present disclosure, in order to control high temperature heat, gas and flame when thermal runaway phenomenon occurs in the battery module, a hole - shaped module frame having a fire extinguishing function and a gas discharge function can be implemented, thereby preventing contamination from the outside before a flame occurs, and suppressing the flame through a chemical reaction when a flame occurs.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a view showing the appearance of a battery module mounted on a conventional battery pack at the time of ignition;
Fig. 2 is a section taken the line A-A of Fig. 1, which is a cross-sectional view showing the appearance of a flame that affects adjacent battery modules during ignition of a battery module mounted on a conventional battery pack.
Fig. 3 is a perspective view showing a battery module according to one embodiment of the present disclosure;
Fig. 4 is an exploded perspective view of the battery module of Fig. 3;
Fig. 5 is a perspective view of a battery cell included in the battery module of Fig. 4;
Fig. 6 is a cross-sectional view taken along the cutting line B-B of Fig. 3;
Fig. 7 is a cross-sectional view showing a state after the thermal decomposition reaction when a flame occurs in the battery module according to the present embodiment;
Fig. 8 is a perspective view showing a battery module according to another embodiment of the present disclosure; and
Fig. 9 is a perspective view showing a battery module according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure can be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

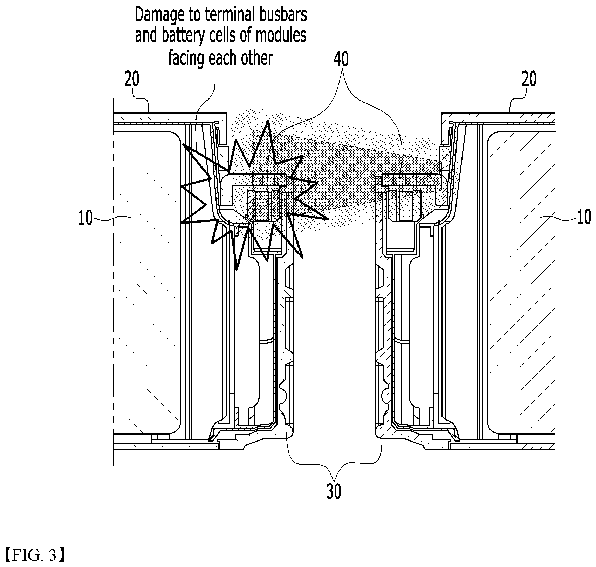

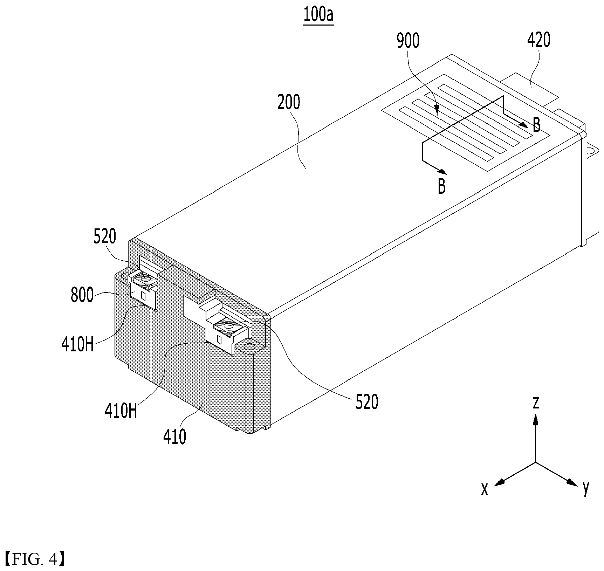

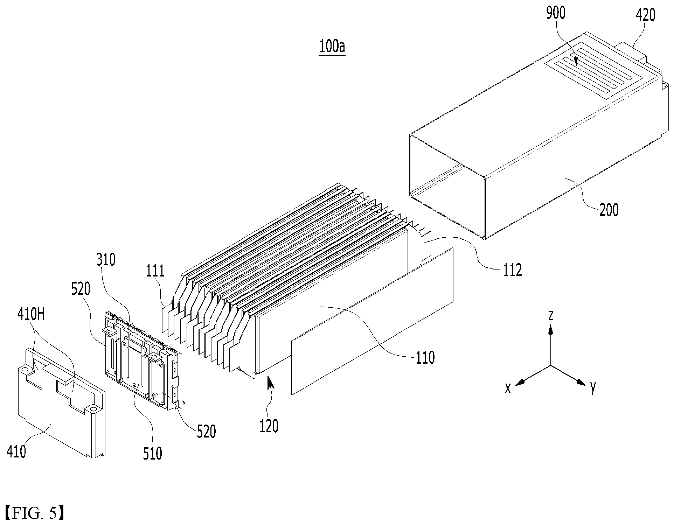

Fig. 3 is a perspective view showing a battery module according to one embodiment of the present disclosure. Fig. 4 is an exploded perspective view of the battery module of Fig. 3. Fig. 5 is a perspective view of a battery cell included in the battery module of Fig. 4.

Referring to Figs. 3 to 5, a battery module 100a according to one embodiment of the present invention includes a battery cell stack 120 in which a plurality of battery cells 110 including electrode leads 111 and 112 protruding in the mutually opposing directions are stacked, a module frame 200 for housing the battery cell stack 120, and a first bus bar frame 310 disposed on one surface of the battery cell stack 120 in one direction (x-axis direction) in which the electrode leads 111 protrude.

First, referring to Fig. 5, the battery cell 110 is preferably a pouch-type battery cell. For example, the battery cell 110 according to the present embodiment has a structure in which two electrode leads 111 and 112 face each other and protrude from one end 114a and the other end 114b of the cell main body 113, respectively. More specifically, the electrode leads 111 and 112 are connected to an electrode assembly (not shown), and protrude from the electrode assembly (not shown) to the outside of the battery cell 110.

On the other hand, the battery cell 110 can be manufactured by joining both end parts 114a and 114b of the cell case 114 and one side part 114c connecting them, in a state in which the electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure sealed by a method such as heat fusion, and the remaining other side part may be formed of a connection part 115. The cell case 114 may be formed of a laminated sheet containing a resin layer and a metal layer.

In addition, the connection part 115 may extend long along one edge of the battery cell 110, and a protrusion part 110p of the battery cell 110 called a bat-ear may be formed at an end part of the connection part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 includes a terrace part 116 formed to extend from the cell case 114 in a protruding direction of the electrode leads 111 and 112.

The battery cell 110 may be composed of a plurality of cells, and the plurality of battery cells 110 may be stacked so as to be electrically connected to each other, thereby forming a battery cell stack 120. Referring to Fig. 4, the battery cells 110 can be stacked along the y-axis direction to form a battery cell stack 120. A first busbar frame 310 may be located on one surface of the battery cell stack 120 in the protruding direction of the electrode leads 111 (x-axis direction). Although not specifically shown, the second busbar frame may be located on the other surface of the battery cell stack 120 in the protruding direction of the electrode leads 112 (-x-axis direction). The module frame 200 can protect the battery cell stack 120 housed inside the module frame 200 and the electrical components connected thereto from external physical impacts.

The module frame 200 according to embodiments of the present disclosure may have a mono frame structure. First, the mono frame may be in the form of a metal plate material in which the upper surface, the lower surface and both side surfaces are integrated, and may be manufactured by extrusion molding. However, the structure of the module frame 200 is not limited thereto, and may be a structure in which a U-shaped frame and an upper plate are combined. In the case of a structure in which a U-shaped frame and an upper plate are combined, it can be formed by combining the upper plate to the upper side of a U-shaped frame, which is a metal plate material having a lower surface and both sides combined or integrated, and it may be manufactured by press molding.

A thermally conductive resin can be injected between the battery cell stack 120 and the lower surface of the module frame 200, and a thermally conductive resin layer (not shown) may be formed between the battery cell stack 120 and the lower surface of the module frame 200 through the injected thermally conductive resin.

On the other hand, the module frame 200 can be opened in the protruding direction of the electrode leads 111 and 112 (x-axis direction, -x-axis direction), and a first end plate 410 and a second end plate 420 may be located on both open sides of the module frame 200, respectively. The first end plate 410 can be joined to the module frame 200 while covering the first busbar frame 310, and the second end plate 420 can be joined to the module frame 200 while covering the second busbar frame (not shown). That is, a first busbar frame 310 may be located between the first end plate 410 and the battery cell stack 120, and a second busbar frame (not shown) may be located between the second end plate 420 and the battery cell stack 120. Further, an insulating cover 800 (see Fig. 3 ) for electrical insulation may be located between the first end plate 410 and the first busbar frame 310.

The first end plate 410 and the second end plate 420 are located so as to cover the one surface and the other surface of the battery cell stack 120, respectively. The first end plate 410 and the second end plate 420 can protect the first busbar frame 310 and various electrical components connected thereto from external impacts. For this purpose, it must have a predetermined strength and may include a metal such as aluminum. Further, the first end plate 410 and the second end plate 420 may be joined to a corresponding edge of the module frame 200 by a method such as welding, respectively.

The first busbar frame 310 is located on one surface of the battery cell stack 120 to cover the battery cell stack 120 and at the same time, guide the connection between the battery cell stack 120 and an external device. Specifically, at least one of the busbar, the terminal busbar and the module connector may be mounted on the first busbar frame 310. In particular, at least one of the busbar, the terminal busbar and the module connector may be mounted on a surface opposite to the surface where the first busbar frame 310 faces the battery cell stack 120. In one example, Fig . 4 shows a state in which the busbar 510 and the terminal busbar 520 are mounted on the first busbar frame 310.

The battery cells 110 constituting the battery cell stack 120 may be connected in series or in parallel by the busbar 510 or the terminal busbar 520, and the battery cells 110 can be electrically connected to an external device or circuit through the terminal busbar 520 exposed to the outside of the battery module 100a. In one example, the terminal busbar 520 may be connected to an external busbar that allows connection with other battery modules adjacent to the battery module including the terminal busbar 520.

The first busbar frame 310 may include an electrically insulating material. The first busbar frame 310 restricts the busbar 510 or the terminal busbar 520 from making contact with the battery cells 110, except for the portion where the busbar 510 or the terminal busbar 520 is joined to the electrode leads 111, thereby preventing the occurrence of a short circuit.

On the other hand, as described above, the second busbar frame may be located on the other surface of the battery cell stack 120, and a busbar and a module connector may be mounted on the second busbar frame. An electrode lead 112 can be joined to such a bus bar.

An opening in which the terminal busbar 520 is exposed can be formed in the first end plate 410 according to the present embodiment. The opening may be a terminal busbar opening. In one example, as shown in Figs. 3 and 4, a terminal busbar opening 410H to which the terminal busbar 520 is exposed can be formed in the first end plate 410. The terminal busbar 520 further includes an upwardly protruding portion as compared with the busbar 510. Such upwardly protruding portion is exposed to the outside of the battery module 100a through the terminal busbar opening 410H. The terminal busbar 520 exposed via the terminal busbar opening 410H may be connected to another battery module or a battery disconnect unit (BDU) to form a high voltage (HV) connection.

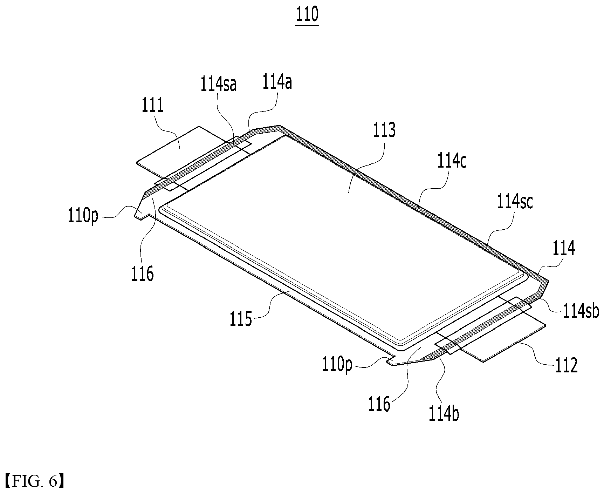

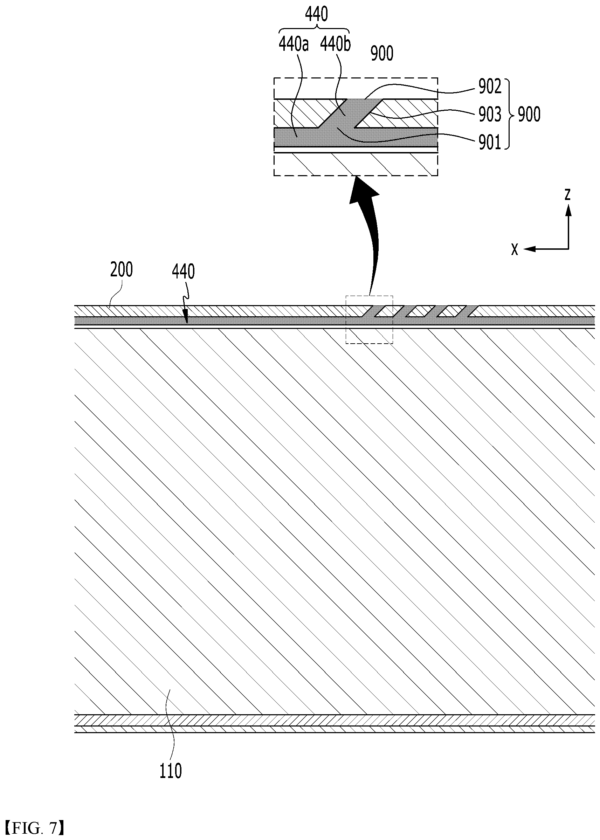

Fig. 6 is a cross-sectional view taken along the cutting line B-B of Fig. 3. Fig. 7 is a cross-sectional view showing a state after the thermal decomposition reaction when a flame occurs in the battery module according to the present embodiment.

Referring to Figs. 3 and 6, the battery module according to this embodiment includes a barrier layer 440 located between the upper side plate of the module frame 200 and the battery cell stack 120. The barrier layer 440 according to the present embodiment includes a fire extinguishing agent. Here, the fire extinguishing agent may be a fire extinguishing agent material in powder form. In one example, the fire extinguishing agent may be any one of sodium hydrogen carbonate (NaHCO₃), potassium hydrogen carbonate (KHCO₃), ammonium phosphate (NH₄H₂PO₃), and a mixture of "potassium hydrogen carbonate (KHCO₃) and urea ((NH₂)₂CO)". In particular, the fire extinguishing agent material included in the barrier layer 440 according to the present embodiment may include potassium hydrogen carbonate (KHCO₃). Potassium carbonate (K₂CO₃), water vapor (H₂O), and carbon dioxide (CO₂) can be generated by a thermal decomposition reaction of potassium hydrogen carbonate, and the water vapor cancels the flame, and carbon dioxide can block the flame from making contact with oxygen and the like. However, the fire extinguishing agent material is not limited thereto, and any material that performs a fire extinguishing function can be used without limitation.

When a flame occurs inside the battery module, a thermal decomposition reaction as shown in the following chemical formula 1 may occur in the barrier layer 440, so that carbon dioxide and water vapor can be generated. The carbon dioxide and water vapor generated at this time generate a suffocation effect that cuts off the supply of oxygen, so that the flame can be suppressed. Specifically, the thermal decomposition reaction is an endothermic reaction, which can absorb heat generated in the battery module, and also can cut off oxygen supply, so that the flame and heat propagation rates are effectively delayed, and the safety of the battery module can be improved.

2KHCO3 → K2CO3 + H2O +CO2 - Q Chemical Formula 1

A venting part 900 may be formed in the upper side plate of the module frame 200 according to the present embodiment. The venting part 900 has a hole structure, and may include an inflow port 901, a discharge port 902, and a connection part 903. The venting unit 900 may include an inflow port 901 connected to the battery cell stack 120, a discharge port 902 for discharging gas flown in through the inflow port 901, and a connection part 903 for connecting the inflow port 901 and the discharge port 902. The connection part 903 may be formed so as to form an angle to the inflow and discharge directions of the inflow port 901 and the discharge port 902.

Here, the inflow port 901 and the discharge port 902 may be arranged spaced apart from each other in the longitudinal direction (x-axis direction) of the upper plate. An imaginary straight line connecting the inflow port 901 and the discharge port 902 may form an angle to the longitudinal direction (x-axis direction) of the upper plate. The imaginary straight line connecting the inflow port 901 and the discharge port 902 may form an angle from the upper plate. The connection part 903 may have an inclined structure forming an angle from the upper plate.

The hole structure of the venting part 900 may have an inclined structure. At this time, the hole structure may obliquely penetrate the upper side plate of the module frame 200. As shown in Fig. 7, when the venting part 900 is opened by the thermal decomposition reaction of the barrier layer 440, flame and gas discharge passages are secured, and direct exposure inside the battery module can be minimized through the inclined structure.

Referring back to Fig. 6, the barrier layer 440 according to the present embodiment may include a first fire extinguishing material layer 440a and a second fire extinguishing material layer 440b. The first fire extinguishing material layer 440a may be located between the upper side plate of the module frame 200 and the battery cell stack 120, and the second fire extinguishing material layer 440b may be located in the venting part 900. The first fire extinguishing material layer 440a and the second fire extinguishing material layer 440b contain a fire extinguishing agent. As described above, at least one of the first fire extinguishing material layer 440a and the second fire extinguishing material layer 440b containing the extinguishing agent may cause a thermal decomposition reaction when a flame occurs inside the battery module. The first fire extinguishing material layer 440a and the second fire extinguishing material layer 440b may be connected to each other.

Before the flame occurs in the battery module, since the second fire extinguishing material layer 440b blocks the venting part 900, it is possible to prevent contaminants from the outside from flowing into the battery module. If a flame occurs inside the battery module, the first fire extinguishing material layer 440a and the second fire extinguishing material layer 440b are thermally decomposed so that the venting part 900 is opened, and flame and gas can be ejected through the venting unit 900. At this time, the thermal energy stored inside the battery module may be discharged.

Although it has been described that the venting part 900 described above is formed on the upper side plate of the module frame 200, the position where the venting part 900 is formed is not limited to the upper side plate of the module frame 200 and can be formed on the lower plate and the side plate.

According to this embodiment, as shown in Fig. 7, a discharge passage 450 may be formed between the upper part of the module frame 200 and the battery cell stack 120. Before the flame occurs, the first fire extinguishing material layer 440a is formed in the portion where the discharge passage 450 is formed. Due to the thermal decomposition reaction of the first fire extinguishing material layer 440a, a discharge passage 450 is formed between one side plate of the module frame 200 and the battery cell stack 120, and gas or heat generated from one side of the battery module may move through the discharge passage 450. Thereafter, it may be discharged from the battery module via the venting part 900 or may be extinguished in the process of thermal decomposition of the barrier layer 440.

Referring to Figs. 1 and 2, in the case of a conventional battery module, high-temperature heat, gas, and flame ejected through an opening of the battery module may affect adjacent battery modules. In particular, adjacent battery modules facing each other for HV connection may cause damage to other electrical components including the terminal busbar 40 or the battery cell 10.

Unlike the conventional case, in the battery module 100a according to the present embodiment, the venting part 900 is formed on the upper side plate of the module frame 200, so that the discharge of high-temperature heat, gas, flame and the like resulting from the battery cell 110 can be restricted through the opening of the first end plate 410, for example, the terminal busbar opening 410H. When the flame is transferred to the terminal busbar 520, the external busbars connecting the adjacent battery modules may be melted and further ignited due to an internal short circuit, which is highly likely to be transferred to the adjacent battery modules. According to the present embodiment, damage to adjacent battery modules and HV connection structures can be reduced.

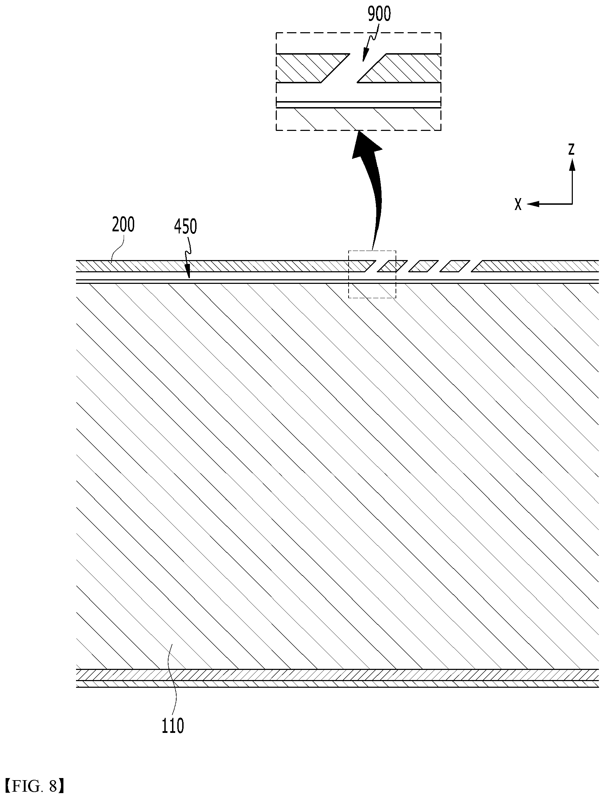

Fig. 8 is a perspective view showing a battery module according to another embodiment of the present disclosure.

Referring to Fig. 8, the venting part 910 according to the present embodiment may be formed so as to be vented in the upward direction with respect to the battery cell stack 120. The venting part 910 may include an inflow port 911, a discharge port 912, and a connection part 913. The venting part 910 may include an inflow port 911 that is connected to the battery cell stack 120 and is formed in an upward direction on the upper surface of the module frame 200, a discharge port 912 that is formed in the upward direction and discharges the gas flown in through the inflow port 911, and a connection part 913 that connects the inflow port 911 and the discharge port 912. The connection part 913 may be formed in a direction perpendicular to the inflow and discharge directions of the inflow port 911 and the discharge port 912. Here, the inflow port 911 and the discharge port 912 may be arranged spaced apart from each other in the longitudinal direction (x-axis direction) of the upper plate. An imaginary straight line connecting the inflow port 911 and the discharge port 912 may form an angle to the longitudinal direction (x-axis direction) of the upper plate. The imaginary straight line connecting the inflow port 911 and the discharge port 912 may form an angle from the upper plate.

The venting unit 910 can discharge high-temperature heat, gas, and flame inside the battery module toward the upper side of the battery module, thereby minimizing damage to other battery modules arranged by abutting the end plate. However, since the discharge port 912 is formed toward the upward direction, foreign substances in the air can enter the outlet 912 due to gravity. Thus, the connection part 913 can be formed in a direction perpendicular to the discharge port 912, thereby minimizing a phenomenon in which foreign substances flown into the discharge port 912 are flown into the battery module through the inflow port 911.

Further, a foreign material blocking part (not shown) for blocking foreign substances entering through the discharge port 912 is formed on the connection part 913, thereby preventing foreign substances from entering into of the inflow port 911 via the connection part 913 from of the discharge port 912.

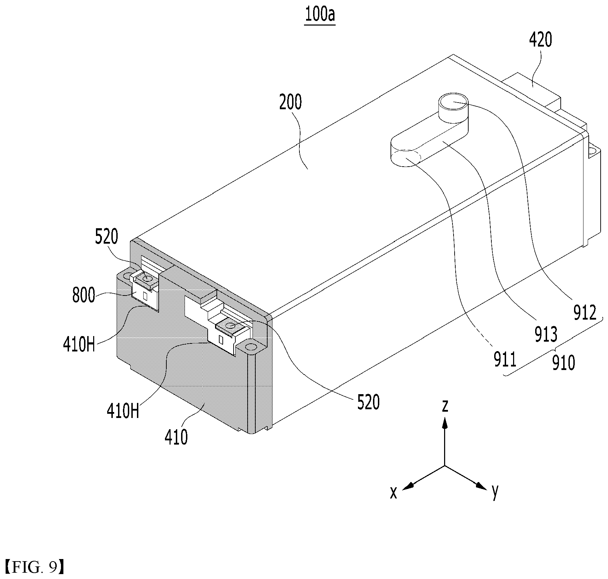

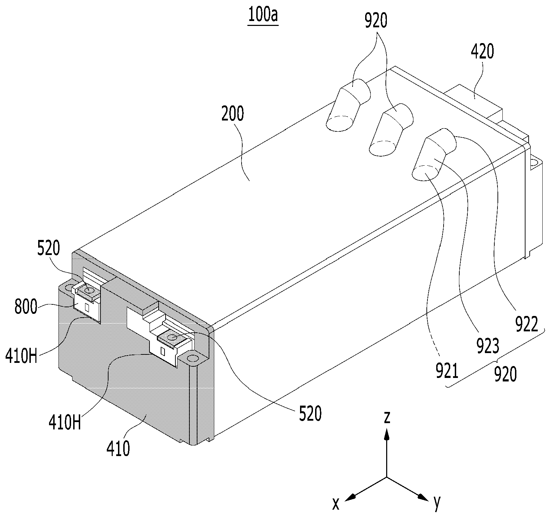

Fig. 9 is a perspective view showing a battery module according to another embodiment of the present disclosure.

Referring to Fig. 9, the venting unit 920 according to the present embodiment includes an inflow port 921 that is formed on the upper surface of the module frame 200 to connect to the battery cell stack, and a discharge port 922 that discharges gas flown through the inflow port 921, wherein the discharge port 922 may be formed in a direction perpendicular to the inflow port 921. In addition, the venting part 920 includes a connection part 923 that is formed between the inflow port 921 and the discharge port 922 and guides gas flowing into the inflow port 921 in a direction in which the discharge port 922 is located, and the upper surface of the connection part 923 may be formed obliquely. The connection part 923 may have an inclined structure forming an angle from the upper plate. Here, the inflow port 921 and the discharge port 922 may be arranged spaced apart from each other in the longitudinal direction (x-axis direction) of the upper plate. An imaginary straight line connecting the inflow port 921 and the discharge port 922 may form an angle to the longitudinal direction (x-axis direction) of the upper plate. The imaginary straight line connecting the inflow port 921 and the discharge port 922 may form an angle from the upper plate.

The discharge port 922 is formed in a direction perpendicular to the upper surface of the inflow port 921 and the module frame 200, thereby capable of preventing the phenomenon that foreign substances floating in the air from enter the discharge port 922 due to gravity. In addition, the upper surface of the connection part 923 is formed obliquely toward the discharge port 922, and high-temperature heat, gas, and flame flown into the inflow port 921 switch directions through the connection part 923 and are naturally discharged through the discharge port 922.

The above-mentioned battery module can be included in the battery pack. The battery pack may have a structure in which one or more of the battery modules according to the present embodiment are gathered, and packed together with a battery management system (BMS) and a cooling device that control and manage battery's temperature, voltage, etc.

The above-mentioned battery module and the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module, which also belongs to the scope of the present disclosure.

Although the invention has been shown and described above with reference to the preferred embodiments, the scope of the present disclosure is not limited thereto, and numerous other modifications and embodiments can be devised by those skilled in the art, which will fall within the spirit and scope of the principles of the invention described in the appended claims.

### [Description of Reference Numerals]

200: module frame
310: busbar frame
440: barrier layer
440a, 440b: fire extinguishing material layer
450: discharge passage
900, 910, 920: venting part

## Claims

1. A battery module comprising:
a battery cell stack in which a plurality of battery cells are stacked, and
a module frame for housing the battery cell stack,
wherein a venting part is formed on one side plate of the module frame,
wherein the venting part comprises an inflow port and a discharge port for discharging gas flowing in through the inflow port, and
wherein the inflow port and the discharge port of the venting part are arranged spaced apart from each other in the longitudinal direction of the one side plate.

2. The battery module of claim 1, wherein:
the battery module comprises a first fire extinguishing material layer located between one side plate of the module frame and the battery cell stack, and
the first fire extinguishing material layer includes a fire extinguishing agent.

3. The battery module of claim 1, wherein:
a second fire extinguishing material layer containing a fire extinguishing agent is formed in the venting part.

4. The battery module of claim 1, wherein:
a first fire extinguishing material layer containing a fire extinguishing agent is formed between one side plate of the module frame and the battery cell stack,
a second fire extinguishing material layer containing a fire extinguishing agent is formed in the venting part, and
the fire extinguishing agent contained in the first fire extinguishing material layer and the second fire extinguishing material layer comprises potassium hydrogen carbonate, and at least one of the first fire extinguishing material layer and the second fire extinguishing material layer causes a thermal decomposition reaction during occurrence of a fire.

5. The battery module of claim 4, wherein:
the first fire extinguishing material layer and the second fire extinguishing material layer are connected to each other.

6. The battery module of claim 1, wherein:
the venting part has a hole structure, and the hole structure has an inclined structure.

7. The battery module of claim 1, wherein:
the venting part has a hole structure formed in an upper side plate of the module frame, and the hole structure obliquely penetrates the upper side plate.

8. The battery module of claim 1, wherein:
the venting part comprises
an inflow port that is formed on the upper side plate of the module frame and faces the battery cell stack, and
a discharge port that discharges gas flowed in through the inflow port,
wherein the discharge port is formed in a direction perpendicular to the inflow port.

9. The battery module of claim 8, wherein:
the venting part comprises
a connection part that is formed between the inflow port and the discharge port and guides gas flowing into the inflow port in a direction in which the discharge port is located, and
the upper surface of the connection part is formed obliquely.

10. The battery module of claim 1, wherein:
the venting part comprises
an inflow port that is connected to the battery cell stack and is formed in the upward direction on the upper side plate of the module frame,
a discharge port that is formed in the upward direction and discharges the gas flown in through the inflow port, and
a connection part that connects the inflow port and the discharge port,
wherein the connection part is formed in a direction perpendicular to the inflow and discharge directions of the inflow port and the discharge port.

11. The battery module of claim 2, wherein:
a discharge passage is formed between the one side plate of the module frame and the battery cell stack by a thermal decomposition reaction of the first fire extinguishing material layer.

12. A battery pack comprising the battery module of claim 1.
